# FASCICULE DE BREVET EUROPEEN

(11) **EP 0 371 845 B1**
(45) Date de publication et mention de la délivrance du brevet: **20.01.1993**
(21) Numéro de dépôt: 89403151.7
(22) Date de dépôt: 16.11.1989
(51) Int. Cl.: A21C 13/00, A21B 5/04

(54) **Chambre de fermentation contrôlée notamment pour la viennoiserie et la boulangerie**
Gesteuerter Gärraum für das Bäcker- und Konditorgewerbe
Controlled proofing chamber, especially for making pastry and for bakery

(30) Priorité: 30.11.1988 FR 8815719
(43) Date de publication de la demande: 06.06.1990
(73) Titulaire: DITO-SAMA, F-23200 Aubusson Creuse (FR)
(72) Inventeur: Bretagnolle, Jean-Pierre, F-23200 Aubusson (FR); Maillot, Bernard, F-23200 Aubusson (FR)
(74) Mandataire: Polus, Camille

(56) Documents cités:
- DE-A- 2 532 700
- FR-A- 2 251 158
- FR-A- 2 464 518
- FR-A- 2 560 011
- FR-A- 2 581 169

## Description

La présente invention a pour objet une chambre de fermentation pour le contrôle de l'atmosphère de chambres de fermentation notamment dans l'industrie de la viennoiserie et de la boulangerie selon le préambule de la revendication 1. Une telle chambre de fermentation est connue du FR-A-244338.

De plus en plus la clientèle recherche des produits dont la cuisson vient d'être effectuée plutôt que des produits préalablement cuits et mis ultérieurement à la vente. Par ailleurs, la demande n'est pas régulière au cours de la journée ce qui oblige à différer dans le temps certaines opérations de fabrication. La qualité des produits demandés est en constante amélioration et de façon à ce qu'elle soit parfaitement reproductible il est nécessaire de disposer de matériels de fabrication sophistiqués.

Ainsi les chambres de fermentation contrôlée permettent, après la fabrication de la pâte et la mise en forme, de bloquer toute fermentation et toute levée de la pâte pendant une durée déterminée tout en permettant la fermentation à partir d'un instant t donné. Cet instant t est déterminé en soustrayant à l'heure à laquelle le produit doit être mis à la vente, la durée de cuisson et la durée de fermentation et de levée.

Ces chambres de fermentation ont donc une double vocation celle d'amener les produits à une température basse afin de bloquer la fermentation mais aussi de les ramener de cette température basse à une température plus élevée correspondant à la fermentation et ceci sans avoir à déplacer les produits. Les chambres de fermentation ont des dimensions prévues pour accepter directement les chariots chargés de leurs plateaux.

Les chambres de fermentation connues comprennent un plafond et des murs munis d'ouverture permettant l'introduction des chariots l'ensemble des murs étant montés directement à partir du sol. Ces murs et plafonds sont parfaitement isolés afin d'éviter toute déperdition tant de frigories que de calories. Au dessus des chariots, à même le plafond est prévu un ensemble frigorifère comportant de façon connue un corps évaporateur, des batteries froides de part et d'autre de ce corps évaporateur, ainsi qu'un ventilateur dans la partie centrale, destiné à forcer l'air à travers les batteries froides. L'ensemble frigorifère est généralement complété par un bac récupérateur des eaux de dégivrage.

Le fonctionnement d'une telle chambre dite de fermentation est le suivant : les chariots sont tout d'abord introduits dans la chambre puis celle-ci est fermée hermétiquement, le ventilateur mis en marche force l'air aspiré de la partie inférieure de la chambre à passer à travers les batteries froides afin d'amener l'ensemble de la chambre à une température basse. Ainsi le produit et les matériels entrés à la température ambiante extérieure sont amenés progressivement à une température basse. En fin d'opération l'ensemble frigorifère a pour rôle de maintenir à une température préfixée de blocage de fermentation l'ensemble de l'atmosphère de la chambre. Afin que les produits fabriqués soient de bonne qualité il est nécessaire que ce refroidissement soit parfaitement exécuté et que la température soit maintenue à la valeur préfixée avec grande précision. De plus, le degré hygrométrique de cette chambre doit être parfaitement contrôlé sous peine de voir les produits se dessiquer perdant ainsi leurs qualités initiales. Il est donc nécessaire de maintenir les vitesses de circulation de l'air dans la chambre aussi faible que possible et pour le moins inférieures à 1 m/s. Les chambres de fermentation doivent donc répondre à deux impératifs essentiels, refroidir de façon homogène l'ensemble des produits en un temps donné et suivant une courbe de descente en température programmée et parallèlement, respecter la vitesse maximum de circulation de l'air pour ne pas provoquer une dessiccation prématurée des produits.

A l'inverse lorsque la chambre est utilisée comme chambre de fermentation la montée en température s'effectue à l'aide l'ensemble firgorifère dont les batteries froides sont à l'arrêt et dont on utilise seulement les résistances de dégivrage. Ainsi l'air mis en mouvement par le ventilateur est conduit à passer sur les résistances au contact desquelles il s'échauffe, ce même ventilateur aspirant l'air froid de la chambre. Actuellement le degré hygrométrique lors de la montée en température est contrôlé à l'aide de dispositifs annexes fonctionnant généralement par évaporation d'une certaine quantité d'eau stockée par exemple dans le bac de récupération ou par injection d'eau pulvérisée.

De tels dispositifs de contrôle de chambre de fermentation présentent de nombreux inconvénients, tout d'abord du point de vue de l'homogénéisation des températures car un tel système central ne peut assurer l'homogénéité des températures dans toutes les parties hautes et basses de la chambre, encore plus difficilement lorsque celle-ci voit son volume encombré par les chariots. D'autre part, les vitesses de circulation de l'air sont très importantes à proximité du ventilateur c'est à dire sur les plateaux supérieurs des chariots a proximité de l'ensemble frigorifèretandis qu'elle sont très lentes aux extrémités de la chambre et pour les plateaux disposés à la partie inférieure de ces mêmes chariots. Le degré hygrométrique est donc très difficilement contrôlable. Par ailleurs, on sait que les ensembles frigorifères nécessitent des dégivrages périodiques au cours de leur fonctionnement. Ce dégivrage est réalisé par mise sous tension des résistances qui assurent le chauffage de l'air et la fusion de la glace déposée sur les ailettes des batteries froides. Le ventilateur devant être maintenu en fonctionnement afin d'assurer la circulation de l'air à l'intérieur de la chambre, des gouttelettes sont donc entraînées par le flux d'air dans la chambre de fermentation, mais ces gouttelettes ont un diamètre très supérieur à celui qu'il conviendrait d'utiliser pour une humidification de la chambre.

Des perfectionnements ont été apportés aux chambres de fermentation classiques en vue d'améliorer l'homogénéisation en température de ces chambres tout en n'utilisant qu'un seul ensemble frigorifère central disposé au plafond.

Le brevet français 2 441 338 propose une chambre pour la conservation et la fermentation des pâtes à pain et plus particulièrement un perfectionnement concernant la répartition du flux d'air froid ou chaud issu de l'ensemble frigorifère dans les parties basses de la chambre. Des ouvertures latérales de l'ensemble frigorifère débouchent dans des conduits sensiblement horizontaux situés en partie haute de la chambre à proximité du plafond qui se prolongent par des conduits sensiblement verticaux disposés le long des murs et qui s'étendent jusqu'à la partie basse de la chambre, ces conduits verticaux présentant des ouvertures latérales. De plus, ces conduits verticaux sont interrompus avant leur contact avec le sol de façon à permettre un débit d'air important en partie basse de la chambre. Les ouvertures latérales se présentent sous la forme de trous ménagés dans le conduit vertical de façon à laisser échapper une certaine quantité d'air à espacement régulier sur toute la hauteur de ce conduit.

Un tel dispositif fonctionne de la façon suivante : les chariots étant en place dans la chambre, l'ensemble frigorifère est mis en route, le ventilateur central aspire l'air en provenance du centre de la chambre et envoie cet air à travers les batteries froides puis à travers le conduit horizontal et le conduit vertical jusqu'en partie inférieure de la chambre tout en diffusant à travers les ouvertures latérales un certain volume d'air en provenance de cet ensemble frigorifère.

Un tel dispositif installé dans une chambre de fermentation n'apporte pas de solution à certains problèmes. En effet, compte tenu des gros volumes d'air traités par l'ensemble frigorifère unique des mesures ont montré que le débit d'air par les ouvertures latérales est négligeable par rapport à celui du débit en partie inférieure des conduits verticaux si bien que compte tenu que les conduits verticaux ont généralement des dimensions inférieures aux dimensions des conduits horizontaux disposés en sortie de l'ensemble frigorifère, la vitesse de sortie de l'air est de l'ordre de 3 m/s, c'est à dire une vitesse très supérieure à la vitesse prévue pour éviter toute dessiccation qui est de 1 m/s. De plus, une telle vitesse d'air favorise le contact de ce dernier avec le sol et provoque des échanges thermiques importants par conduction et de plus, au contact de cette paroi froide, l'humidité contenue dans cet air se condense à la surface du sol.

Une telle chambre de fermentation ne solutionne pas les problèmes essentiels que sont la dessiccation et l'homogénéisation en température.

La présente invention a pour but objet une chambre de fermentation contrôlée qui évite toute dessiccation des produits, assure une homogénéisation en tout point du volume défini par la chambre tant dans la phase de descente en température que dans la phase de montée en température, un maintien du degré hygrométrique fixé lors du réchauffage par diffusion d'eau sous forme de vapeur en supprimant la distribution de gouttelettes en provenance du groupe frigorifique, une adaptation la puissance froide ou chaude à la charge, de plusieurs allures de chauffe, et présente toute garantie de sécurité y compris en cas de pane d'un des éléments.

A cette fin la chambre de fermentation contrôlée selon l'invention, destinée à recevoir des chariots chargés de produits, notamment de viennoiserie et de boulangerie comprend des murs avec au moins une porte d'accès et un plafond, thermiquement isolés, un ensemble frigorifère composé d'un ventilateur, d'un évaporateur avec batteries froides. de résistances de dégivrage et d'un bac de dégivrage disposés dans un carter fixé sur le plafond et muni d'au moins un orifice de sortie, et d'un humidificateur et d'un gainage vertical comprenant une ouverture en partie basse et se caractérise en ce qu'il comprend au moins un ventilateur tangentiel disposé sur l'un des murs, des moyens de chauffage du flux d'air de sortie de chaque ventilateur, le gainage vertical ayant l'une des extrémités située à hauteur du ventilateur et l'ouverture basse de l'autre extrémité en partie inférieure de la chambre au niveau du sol.

La chambre selon l'invention se caractérise également en ce qu'un ensemble ventilateur, résistance et gaine est prévu pour chacun des chariots introduits dans la chambre de fermentation.

Selon une autre caractéristique les moyens de chauffage comprennent deux résistances indépendantes.

Ces résistances peuvent également être de même puissance. Elles sont disposées en sortie de chaque ventilateur.

La chambre se caractérise en outre en ce que la puissance des ventilateurs tangentiels est telle que la vitesse de sortie du flux d'air par l'ouverture basse est inférieure à 1 m/s.

La présente invention est décrite ci-après selon un mode de réalisation particulier en regard des dessins annexés sur lesquels :
- la figure 1 représente une vue de dessus d'une chambre de fermentation agencée selon l'invention comportant 6 chariots.
- la figure 2 est une vue en coupe selon la ligne 2.2 de la figure 1, et
- la figure 3 est une vue en coupe d'un humidificateur selon l'invention.

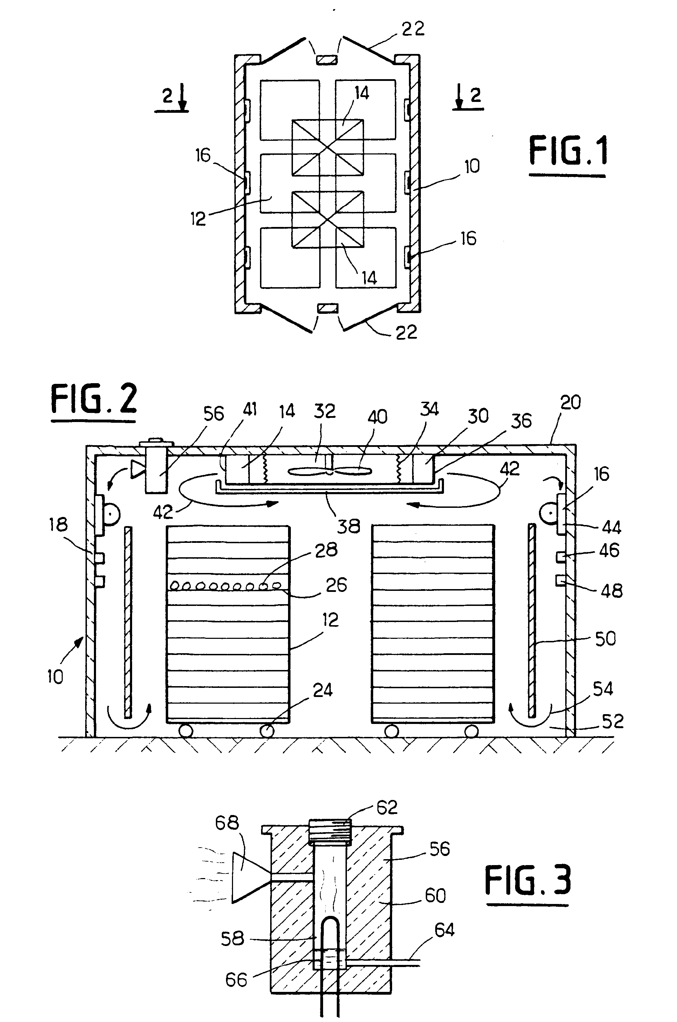

La figure 1 représente une chambre de fermentation contrôlée 10 dans laquelle sont disposés des chariots 12, des ensembles frigorifères 14, avec des ventilateurs tangentiels 16.

La chambre de fermentation est généralement construite à même le sol comme le montre plus précisément la figure 2. Elle comprend des murs 18, réalisés en matériaux isolants ainsi qu'un plafond 20 supporté par ces mêmes murs. Des ouvertures 22 sont prévues dans cette chambre de façon à pouvoir pousser directement les chariots dans la chambre de fermentation, les dimensions de cette dernière étant prévues pour accueillir un nombre déterminé de chariots de dimensions données.

Les chariots 12 de type connu sont montés sur des roulettes 24 et comprennent plusieurs glissières sur lesquelles reposent des plateaux 26 supportant les produits 28.

Les ensembles frigorifères comprennent un évaporateur 32, des résistances de dégivrage 34, des batteries froides 36, un bac de récupération 38 des eaux de dégivrage, et un ventilateur 40 fonctionnant en aspiration centrale et en éjection latérale à travers les batteries froides dans l'exemple représenté d'un évaporateur du type double flux. Les flux d'air latéraux sont guidés pas un carter 41 contenant l'ensemble des éléments de l'ensemble frigorifère. La puissance de cetensemble frigorifère et notamment du ventilateur 40 est telle que seul le volume situé au dessus des chariots est traité par cet ensemble frigorifère ainsi que l'indique les flèches 42.

Les ventilateurs tangentiels 10 comprennent un ventilateur proprement dit 44, des résistances 46 et 48 ainsi qu'un gainage 50 disposé parallèlement au mur 18. Les résistances 46 et 48 sont disposées immédiatement après la sortie du ventilateur 44, ce ventilateur étant lui même disposé sensiblement au niveau de l'extrémité supérieure des chariots. Le gainage quant à lui prend son origine au niveau de la sortie du ventilateur 44 et possède une ouverture basse 52 au niveau du sol afin de laisser passer des flux d'air représentés par la flèche 54. Compte tenu de son sens de fonctionnement, le ventilateur 44 est orienté de façon que sa prise d'air s'effectue dans la partie haute de la chambre et que le refoulement soit dirigé dans le gainage du haut vers le bas.

Chaque chariot possède en vis à vis de l'une de ses faces un ensemble ventilateur, résistance et gainage. Quant à la puissance du ventilateur 44, elle est prévue pour générer des débits de l'ordre de 100 m3/heure afin d'induire des vitesses en sortie de gainage qui soient inférieures à 1 m/s.

La chambre de fermentation contrôlée 10 est également équipée d'un humidificateur 56, disposé à l'extérieur de l'ensemble frigorifère, et représenté plus en détail à la figure 3.

L'humidificateur 56 comprend une chambre de vaporisation ménagée à l'intérieur d'un corps isolant 60, l'accès à cette chambre étant autorisé par le bouchon amovible 62. La chambre de vaporisation 58 est alimentée en eau par l'adduction 64 et comprend une résistance électrique 66 et une évacuation 68 de la vapeur produite.

Le fonctionnement d'une telle chambre de fermentation contrôlée va maintenant être décrit dans ses deux phases de mise au froid des produits afin d'en bloquer la fermentation et de réchauffage afin de favoriser la levée des produits avant cuisson. Les chariots 12 sont introduits dans la chambre de fermentation 10 et les accès 22 sont ensuite fermés. Les produits étant à température ambiante il est nécessaire de les porter à des températures basses suivant une courbe de descente en température de profil déterminé qui ne fait pas l'objet de la présente invention et qui sont bien connues par ailleurs, cette descente en température devant néanmoins s'effectuer de façon homogène dans tout le volume de la chambre de fermentation. Les ensembles frigorifères 14 sont mis en marche et une grosse partie du volume d'air contenu dans la chambre est traitée par cet ensemble sachant que le volume traite correspond essentiellement au volume compris entre la partie supérieure des chariots et le plafond. Parallèlement, chaque ventilateur tangentiel 16 est également mis en marche de façon à faire circuler une partie de l'air du haut vers le bas progressivement abaissé en température par l'ensemble frigorifère. Cet air ayant une vitesse inférieure à 1 m/s ne dessique pas les produits tout en permettant une bonne homogénéisation des frigories. Il est clair que la convection naturelle joue également son rôle.

Une fois la température fixée atteinte, l'ensemble frigorifère est arrêté tandis que les ventilateurs 44 restent en marche de façon à assurer une bonne homogénéisation de la température de la chambre. L'ensemble firgorifère ne sera donc mis en route durant ce stockage à froid que pour compenser les pertes thermiques à travers les parois de la chambre.

Après un stockage de durée déterminée, et compte tenu de l'heure de cuisson l'utilisateur peut prévoir de réchauffer l'atmosphère de la chambre de fermentation afin de faire lever les produits et de les préparer pour la cuisson. Dans ce cas, seul le ventilateur de l'ensemble frigorifère est utilisé, le ventilateur 40 et les ventilateurs 44 sont donc en marche simultanée. Parallèlement, les résistance 46 et 48 sont alimentées soit l'une , soit l'autre, soit les deux à la fois en fonction des allures de chauffe et de la puissance thermique requise pour suivre le profil de montée en température choisi. L'air chaud est envoyé à la base des chariots et recyclé à l'aide des ventilateurs 44.

En fonction du degré hygrométrique choisi, il est possible de faire varier ce dernier par mise en marche de l'humidificateur 56, la vapeur émise par cet humidificateur étant directement entraînée par les ventilateurs tangentiels 44 ce qui assure une bonne homogénéisation également du degré hygrométrique dans l'ensemble du volume de la chambre.

Le fonctionnement de l'humidificateur est le suivant : l'eau introduite dans la chambre de vaporisation 58 par la canalisation 64 est vaporisée par la résistance 66 mises sous tension et la vapeur en sort par l'évacuation 68.

Lorsque la température plus élevée de levée est atteinte les résistances 46 et 48 ne sont plus alimentées et seuls les ventilateurs 44 et 40 assurent une bonne homogénéisation des calories au sein de la chambre, les résistances 46 et 48 n'étant mises sous tension que pour compenser les pertes thermiques à travers les parois de la chambre. Dans ce cas, il est possible de faire fonctionner l'une ou l'autre des résistances sans qu'il y ait besoin d'utiliser la totalité de la puissance disponible. De même en cas de panne d'une des résistances. il est néanmoins possible d'obtenir une montée en température correcte car seule une résistance sur douze dans le cas représenté étant en panne la puissance utile n'est que très peu différente de la puissance maximale.

Dans certains cas particuliers, les chambres de fermentation connues ne sont conçues normalement que pour fonctionner à pleine charge, alors qu'elles peuvent travailler dans le cas de la présente invention en charge réduite. En effet, dans le cas représenté, si seulement cinq chariots sont introduits dans la chambre celle-ci peut fonctionner et la température et le degré hygrométrique seront homogènes malgré l'absence du sixième chariot les flux de circulation restant relativement peu perturbés compte tenu de la répartition de ceux-ci en face de chacun des chariots.

De même dans le cas d'une introduction d'un sixième chariot avec un décalage dans le temps par rapport aux cinq premiers alors que ces cinq chariots ont déjà commencé par exemple la descente en température il est encore possible de travailler puisque le sixième chariot a son ensemble ventilateur et gaine indépendant et dispose par conséquent de sa micro atmosphère sans perturber l'atmosphère générale de la chambre, jusqu'a égalisation de l'ensemble des atmosphères de cette même chambre.

Les avantages de la chambre de fermentation contrôlée selon l'invention sont nombreux. Tout d'abord les moyens de chauffage répartis permettent de ne jamais avoir un chauffage intégralement en panne ce qui compromettrait le traitement de l'ensemble des produits. D'autre part, l'ensemble frigorifère ne travaille pas en permanence et il est moins sollicité puisqu'une partie du volume d'air est traité par les ventilateurs tangentiels en ce qui concerne leur circulation. D'autre part, les résistances servant au dégivrage des batteries froides sont seulement sollicitées à cet effet et non pas utilisées pour le chauffage de l'ensemble de la chambre de fermentation à tel point que ces résistances peuvent être supprimées lorsque la chambre travaille à des températures au dessus de zéro, le dégivrage des batteries froides s'effectuant à l'air chaud. Ceci limite les risques de panne de l'ensemble frigorifère. L'humidificateur également disposé indépendamment de l'ensemble frigorifère principal évite toute condensation supplémentaire sur les batteries froides lors de certaines opérations. La dessiccation des produits est évitée par une vitesse de circulation lente des flux d'air et par le fait que le gros débit est directement recyclé par l'évaporateur double flux sans passer à travers les chariots. La chambre de fermentation selon l'invention permet l'introduction de chariots en décalage dans le temps dans la chambre sans perturbation et interaction entre les chariots.

D'autre part, les ensembles ventilateurs, résistances et gaines peuvent être disposés sur des parties ouvrantes telles que 22 sans que cela pose de problème. Ainsi les chambres de fermentation peuvent avoir des dispositions quelconques, l'agencement selon l'invention reste possible.

Les chambres de fermentation sont généralement disposées à même le sol afin que l'extérieur et l'intérieur de la chambre soient de niveau ce qui facilite l'introduction des chariots mais qui conduit généralement à disposer de chambres de fermentation dont le sol n'est pas isolé. Les vitesses lentes inférieures à 1 m/s de circulation des flux d'air des ventilateurs tangentiels limitent la condensation au niveau de la paroi froide que représente ce sol.

## Revendications

1. Chambre de fermentation (10) destinée à recevoir des chariots (12) chargés de produits notamment de boulangerie et de viennoiserie comprenant des murs (18) avec au moins une porte d'accès (22) et un plafond (20) thermiquement isolés, au moins un ensemble frigorifique (14) composé d'un premier ventilateur (40), d'un évaporateur (32), de résistances de dégivrage (34) et d'un bac de dégivrage (38) disposés dans un même carter (41) fixé sur le plafond et muni d'au moins un orifice de sortie, un humidificateur et un gainage vertical (50) comprenant une ouverture (52) en partie basse caractérisée en ce qu'elle comprend au moins un deuxième ventilateur tangentiel (44) disposé sur l'un des murs (18), des moyens de chauffage (46, 48) du flux d'air de sortie de chaque deuxième ventilateur (44), le gainage (50) vertical ayant l'une des extrémités située à hauteur du deuxième ventilateur et l'ouverture basse (52) disposée en partie inférieure de la chambre.

2. Chambre de fermentation selon la revendication 1, caractérisée en ce qu'elle comprend un ensemble ventilateur tangentiel (16) comportant un ventilateur (44), des résistances (46, 48) et une gaine (50), pour chacun des chariots.

3. Chambre de fermentation selon l'une des revendications 1 ou 2, caractérisée en ce que les moyens de chauffage (46, 48) comprennent deux résistances indépendantes.

4. Chambre de fermentation selon l'une quelconque des revendications précédentes, caractérisée en ce que les deux résistances (46, 48) sont disposées à la sortie de chaque ventilateur (44).

5. Chambre de fermentation selon l'une quelconque des revendications précédentes, caractérisée en ce que l'évaporateur (32) est du type double flux.

6. Chambre de fermentation selon l'une quelconque des revendications précédentes, caractérisée en ce que la puissance des ventilateurs tangentiels (44) est telle que la vitesse de sortie du flux d'air (54) par l'ouverture basse (52) est inférieure à 1 m/s.

7. Chambre de fermentation selon l'une quelconque des revendications précédentes, caractérisée en ce que l'humidificateur (56) est disposé à l'extérieur de l'ensemble frigorifique (14).

8. Chambre de fermentation selon la revendication 7, caractérisée en ce que l'humidificateur (56) comprend un corps isolant (60), une chambre de vaporisation (58), une résistance électrique (66), une alimentation en eau (64) de la chambre et une évacuation de vapeur (68).

## Claims

1. Fermentation chamber (10) intended to receive trolleys (12) loaded with in particular bakery products and Viennese bread and buns comprising walls (18) with at least one access door (22) and a thermally insulated roof (20), at least one refrigerating unit (14) composed of a first ventilator (40), an evaporator (32), defrosting resistors (34) and a drain pan (38) arranged in the same housing (41) fixed on the roof and fitted with at least one outlet, one humidifier and one vertical sheathing (50) comprising an opening (52) in the lower part characterized in that it contains at least a second tangential ventilator (44) arranged on one of the walls (18), means (46, 48) for heating the exiting air flow from each second ventilator (44), the vertical sheathing (50) having one of its ends situated level the second ventilator and the lower opening (52) arranged at the lower part of the chamber.

2. Fermentation chamber according to claim 1, characterized in that it contains a tangential ventilator unit (16) comprising a ventilator (44), resistors (46, 48) and a sheath (50), for each of the trolleys.

3. Fermentation chamber according to one of claims 1 or 2, characterized in that the heating means (46, 48) contain two independent resistors.

4. Fermentation chamber according to any one of the preceding claims, characterized in that the two resistors (46, 48) are arranged at the exit of each ventilator (44).

5. Fermentation chamber according to any one of the preceding claims, characterized in that the evaporator (32) is of double flow type.

6. Fermentation chamber according to any one of the preceding claims, characterized in that the power of the tangential ventilators (44) is such that the exit speed of the air flow (54) through the lower opening (52) is less than 1 m/s.

7. Fermentation chamber according to any one of the preceding claims, characterized in that the humidifier (56) is arranged outside the refrigerating unit (14).

8. Fermentation chamber according to claim 7, characterized in that the humidifier (56) contains an insulation casing (60), a vaporizing chamber (58), an electrical resistor (66), a water supply (64) for the chamber and a steam outlet (68).

## Patentansprüche

1. Gärraum (10), bestimmt zum Aufnehmen von Karren (12), welche mit Produkten insbesondere des Bäcker- und Konditorgewerbes beladen sind, welcher Wände (18) mit wenigstens einer Zugangstür (22) und eine Decke (20), thermisch isoliert, wenigstens eine Kühleinheit (14), aufgebaut aus einem ersten Lüfter (40), einem Verdampfer (32), Entfrostungswiderständen (34) und einem Entfrostungsbehälter (38), in einem gemeinsamen Gehäuse (41) angeordnet, das an der Decke angebracht ist und das mit wenigstens einer Auslaßöffnung versehen ist, einen Befeuchter und einen vertikalen Mantel (50) mit einer Öffnung (52) im unteren Teil aufweist, dadurch gekennzeichnet, daß er wenigstens einen zweiten Tangentiallüfter (44) aufweist, der an einer der Wände (18) angeordnet ist, Heizmittel (46, 48) für den Luftstrom, der vom zweiten Lüfter (44) ausgeht, wobei einer der Endabschnitte des vertikalen Mantels (50) in der Höhe des zweiten Lüfters gelegen ist und die untere Öffnung (52) im niederen Teil des Raumes angeordnet ist.

2. Gärraum nach Anspruch 1, dadurch gekennzeichnet, daß er eine Tangentiallüftereinheit (16), welche einen Lüfter (44), Widerstände (46, 48) und einen Mantel (50) umfaßt, für jeden der Karren aufweist.

3. Gärraum nach Anspruch 1 oder 2, dadurch gekennzeichnet, daß die Heizmittel (46, 48) zwei unabhängige Widerstände aufweisen.

4. Gärraum nach einem der vorangehenden Ansprüche, dadurch gekennzeichnet, daß die zwei Widerstände (46, 48) am Auslaß jedes Lüfters (44) angeordnet sind.

5. Gärraum nach einem der vorangehenden Ansprüche, dadurch gekennzeichnet, daß der Verdampfer (32) vom Doppelstromtyp ist.

6. Gärraum nach einem der vorangehenden Ansprüche, dadurch gekennzeichnet, daß die Leistung der Tangentiallüfter (44) derart ist, daß die Ausströmgeschwindigkeit des Luftstromes (54) durch die untere Öffnung (52) geringer als 1 m/s ist.

7. Gärraum nach einem der vorangehenden Ansprüche, dadurch gekennzeichnet, daß der Befeuchter (56) außerhalb der Kühleinheit (14) angeordnet ist.

8. Gärraum nach Anspruch 7, dadurch gekennzeichnet, daß der Befeuchter (56) einen isolierenden Körper (60), einen Verdampfungsraum (58), einen elektrischen Widerstand (66), eine Zufuhreinrichtung für Wasser (64) aus dem Raum und einen Dampfablaß (68) aufweist.
